Europäisches Patentamt

European Patent Office

Office européen des brevets

(11) Numéro de publication: **0 094 290**
A2

# DEMANDE DE BREVET EUROPEEN

(21) Numéro de dépôt: **83400860.9**

(51) Int. Cl.³: **G 01 G 3/14**

(22) Date de dépôt: **29.04.83**

(30) Priorité: **11.05.82 FR 8208152**
**01.02.83 FR 8301550**

(43) Date de publication de la demande: **16.11.83**
**Bulletin 83/46**

(84) Etats contractants désignés: **AT BE CH DE FR GB IT LI LU NL SE**

(71) Demandeur: **TESTUT-AEQUITAS, 8, rue Popincourt, F-75011 Paris (FR)**

(72) Inventeur: **Dujardin, Thierry, 3 rue Poussin, F-75016 Paris (FR)**
Inventeur: **Valadier, Jean-Claude, 125 Bd Auguste Blanqui, F-75013 Paris (FR)**
Inventeur: **Langlais, Jacques, 38, rue des Ecoles, F-91179 Coudray Montreaux (FR)**

(74) Mandataire: **Martin, Jean-Jacques et al, Cabinet REGIMBEAU 26, Avenue Kléber, F-75116 Paris (FR)**

(54) **Récepteur de charge à parallélogramme déformable.**

(57) La présente invention concerne un récepteur de charge comprenant un parallélogramme déformable réalisé per une structure monobloc et un transducteur de charge pour détecteur la déformation du parallélogramme sous l'effet de la charge appliquée.

Le transducteur comprend quatre séries d'enroulements de fil de jauge pré-tendu disposées chacune obliquement entre les deux montants (12, 16) ou entre les deux bras (20, 22) du parallélogramme de manière à former deux séries d'enroulements (34) dont les brins principaux sont tendus et deux séries d'enroulements (36) dont les brins principaux sont comprimés sous l'effet de la charge appliquée, les quatre séries d'enroulements étant branchées dans un montage électrique en pont.

Application aux balances à usage commercial.

1

"RECEPTEUR DE CHARGE A PARALLELOGRAMME DEFORMABLE"

La présente invention concerne un récepteur de charge à parallélogramme déformable, destiné plus particulièrement à être utilisé dans les balances à usage commercial.

Elle concerne plus particulièrement un récepteur de charge du type comprenant un montant fixe solidaire d'un bâti, un montant chargé solidaire d'un plateau porteur-charge et deux bras articulés sur les montants pour former avec eux un parallélogramme déformable, et dans lequel l'ensemble des deux montants et des deux bras est réalisé par une structure monobloc, munie d'étranglements qui définissent l'articulation du parallélogramme déformable, tandis qu'un transducteur de charge est prévu pour détecter la déformation du parallélogramme sous l'effet de la charge appliquée sur le plateau.

Dans les récepteurs de charge connus de ce type, le transducteur de charge peut être constitué soit par un condensateur formé par deux électrodes montées solidaires respectivement du montant fixe et du montant chargé, soit par des jauges de contrainte convenablement disposées sur les étranglements du parallélogramme déformable.

La présente invention vise à exploiter les variations dimensionnelles du parallélogramme déformable en utilisant des fils de jauge tendus qui constitueront le

2

transducteur de charge du récepteur de charge.

Selon la caractéristique essentielle de l'invention, le transducteur de charge comprend quatre séries d'enroulements de fil de jauge pré-tendu disposées chacune obliquement entre les deux montants ou entre les deux bras du parallélogramme de manière à former deux séries d'enroulements dont les brins principaux sont tendus et deux séries d'enroulements dont les brins principaux sont comprimés sous l'effet de la charge appliquée, les quatre séries d'enroulements étant branchées dans un montage électrique en pont.

Les expressions "brins tendus" et "brins comprimés" sont utilisées ici à des fins de simplification. En fait, compte tenu de la pré-tension du fil de jauge, les brins "tendus" sont soumis à une augmentation de tension, tandis que les brins "comprimés" sont détendus, en donnant ainsi le même effet résistif qu'une compression.

Dans un premier mode de réalisation de l'invention, les deux séries d'enroulements dont les brins principaux sont tendus croisent les deux séries d'enroulements dont les brins principaux sont comprimés.

Dans ce premier mode de réalisation de l'invention, les séries d'enroulements se croisent avantageusement sensiblement suivant les diagonales du parallélogramme déformable. Toutefois, on peut également disposer les séries d'enroulements de façon qu'elles soient plus ou moins inclinées par rapport aux diagonales joignant les articulations du parallélogramme de manière à dégager celles-ci pour les réglages d'excentration et à obtenir un signal plus ou moins grand.

Dans un second mode de réalisation de l'invention, les deux séries d'enroulements dont les brins principaux sont tendus et les deux séries d'enroulements dont les brins principaux sont comprimés sont inclinés symétriquement de part et d'autre d'un axe de symétrie du parallélogramme en définissant une structure en V ou en V renversé.

Le parallélogramme déformable du récepteur de charge de l'invention peut soit comprendre des montants et des bras rectilignes, soit avoir la forme générale d'un anneau circulaire dans la matière duquel sont usinées les articulations.

L'utilisation d'un parallélogramme déformable en forme d'anneau circulaire est particulièrement avantageuse du fait que l'obliquité de chacune des séries d'enroulements par rapport à la face d'appui est pratiquement nulle, ce qui fait que le fil de jauge n'a pas tendance à glisser comme ce pourrait être le cas avec un parallélogramme avec des montants et des bras rectilignes.

Chaque série d'enroulements comprendra au moins un enroulement qui comporte deux brins principaux parallèles dont les extrémités sont en contact avec les deux montants ou avec les deux bras du parallélogramme.

Dans un mode préféré de réalisation de l'invention, chaque enroulement sera collé sur les deux montants ou les deux bras, et sur toutes les portions de l'enroulement en contact avec les montants ou les bras du parallélogramme.

Selon une autre variante de réalisation, le récepteur de charge comprend quatre tiges filetées traversant le parallélogramme en sorte que leurs deux extrémités dépassent de part et d'autre du parallélogramme pour fournir des zones d'ancrage aux séries d'enroulements de fil de jauge, deux séries d'enroulements étant situées d'un côté du parallélogramme et les deux autres séries d'enroulements étant situées de l'autre côté du parallélogramme.

4

Le parallélogramme déformable du récepteur de charge de l'invention peut être noyé totalement ou partiellement dans un fluide, notamment dans de l'huile.

Conformément à un troisième mode de réalisation de l'invention, les étranglements définissant les articulations du parallélogramme déformable sont délimités chacun par deux alésages adjacents comprenant un alésage intérieur et un alésage extérieur s'ouvrant respectivement vers l'intérieur et vers l'extérieur du parallélogramme déformable.

Ces alésages sont de préférence des alésages de même diamètre, mais ils peuvent, en variante, être réalisés avec des diamètres différents.

Dans un mode de réalisation préféré de l'invention, les axes des alésages intérieurs et des alésages extérieurs sont parallèles entre eux et contenus dans deux plans verticaux en sorte que les étranglements présentent, dans leur zone de flexion, une ligne neutre dont la pente est horizontale.

Dans une autre variante de réalisation de l'invention, les axes des alésages intérieurs sont contenus dans deux plans verticaux et les axes des alésages extérieurs dans deux autres plans verticaux, en sorte que les axes des deux alésages extérieurs d'un bras soient plus proches l'un de l'autre que les axes des deux alésages intérieurs du même bras. Dans un tel mode de réalisation, la pente de la ligne neutre des étranglements est alors inclinée sur l'horizontale.

Les quatre alésages intérieurs et les quatre alésages extérieurs sont avantageusement réalisés au travers d'une plaque rectangulaire d'épaisseur présentant un évidement circulaire central, cet évidement ne nécessitant pas un usinage de précision et n'étant circulaire que pour

5

la facilité de son usinage. Un évidement carré, rectangulaire ou ovale, etc... conviendrait aussi bien.

Il en résulte alors une facilité de fabrication puisqu'il suffit de réaliser huit alésages sur la plaque au lieu de réaliser quatre alésages de plus grand diamètre et deux opérations de surfaçage, comme c'est le cas avec le dispositif décrit précédemment.

Il en résulte également que la contrainte maximale dans le métal ou l'alliage métallique constituant le corps d'épreuve est moins élevée, de l'ordre de moitié moins par exemple, que dans le cas des jauges de déformation.

Il est encore prévu, selon la présente invention que les quatre séries d'enroulements sont appliquées sur les bras du parallélogramme déformable par l'intermédiaire d'éléments d'appui isolants offrant un déport pour que le fil de jauge se trouve à distance des faces verticales des bras.

Dans un mode de réalisation préféré, les éléments d'appui comprennent au moins une plaque isolante fixée, par exemplr vissée ou collée, sur la face extérieure des bras, présentant une largeur supérieure à celle du bras et comportant des encoches sur son chant, aux endroits de passage des fils de jauge.

Cette plaque isolante peut présenter une largeur constante, ou de préférence une largeur variable, de telle sorte que les fils de jauge ne se touchent pas aux endroits de leur croisement.

Il est en outre avantageux que l'une des plaques isolantes, de préférence celle qui se trouve sous le bras inférieur du parallélogramme, constitue un circuit imprimé, pour la connexion des quatre séries d'enroulements.

6

En variante, chaque élément d'appui peut comporter deux tiges cylindriques isolantes évidées suivant un quart de rond et appliquées chacune sur une arête d'un bras.

La présente invention prévoit également de réaliser un carter de protection solidaire du montant fixe et offrant un jeu pour permettre la déformation du parallélogramme. Un tel carter limite au maximum les turbulences d'air autour des fils et permet d'améliorer la stabilité de la mesure.

D'autres caractéristiques et avantages de l'invention seront mieux compris à la lecture de la description détaillée qui suit et qui se réfère aux dessins annexés, donnés uniquement à titre illustratif, sur lesquels :

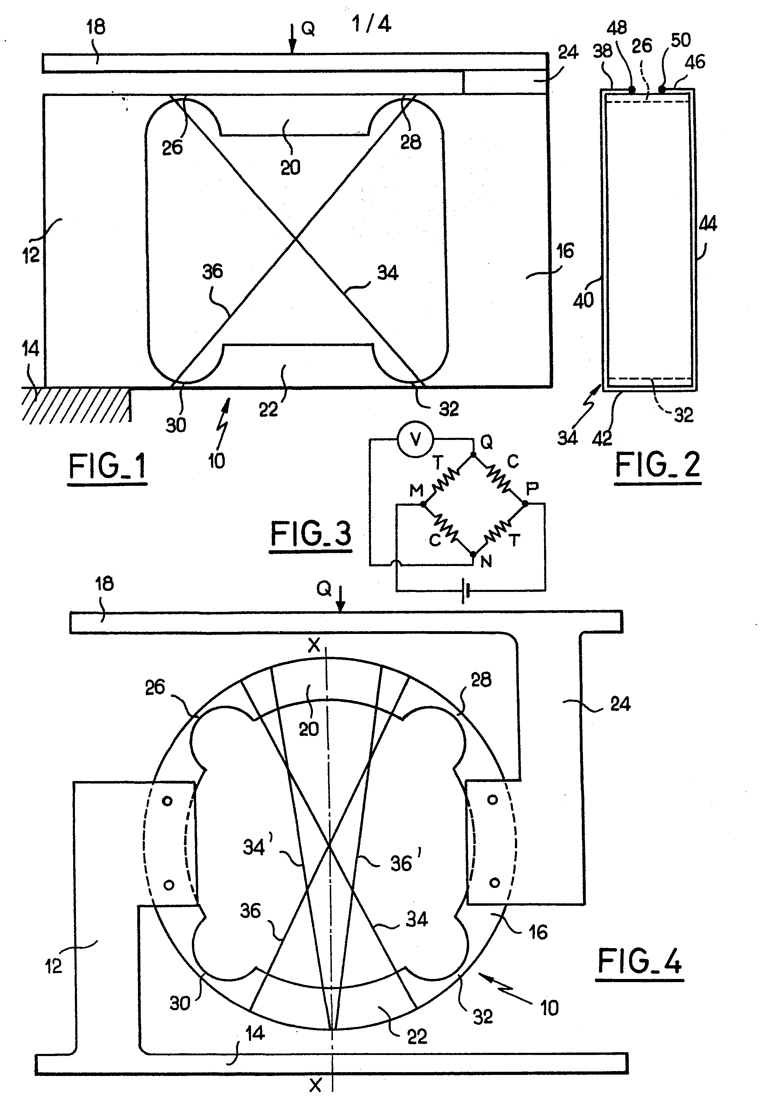

. la figure 1 est une vue en élévation d'un récepteur de charge conforme au premier mode de réalisation précité ;

. la figure 2 est une vue de côté du récepteur de charge de la figure 1, montrant la disposition d'un enroulement de fils de jauge ;

. la figure 3 montre le montage électrique en pont du récepteur de charge des figures 1 et 2 ;

. la figure 4 est une vue en élévation d'un récepteur de charge conforme au deuxième mode de réalisation précité ;

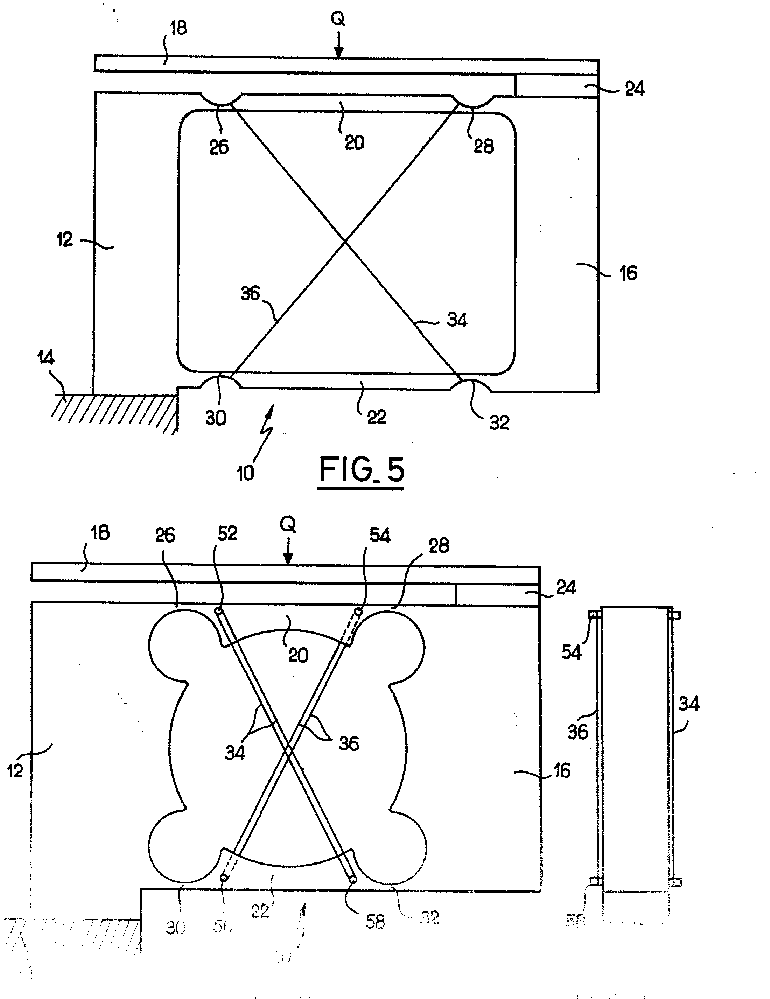

. la figure 5 est une vue en élévation d'un récepteur de charge conforme au premier mode de réalisation, dont la concavité des évidements est tournée vers l'extérieur pour faciliter la mise en place des séries d'enroulements ;

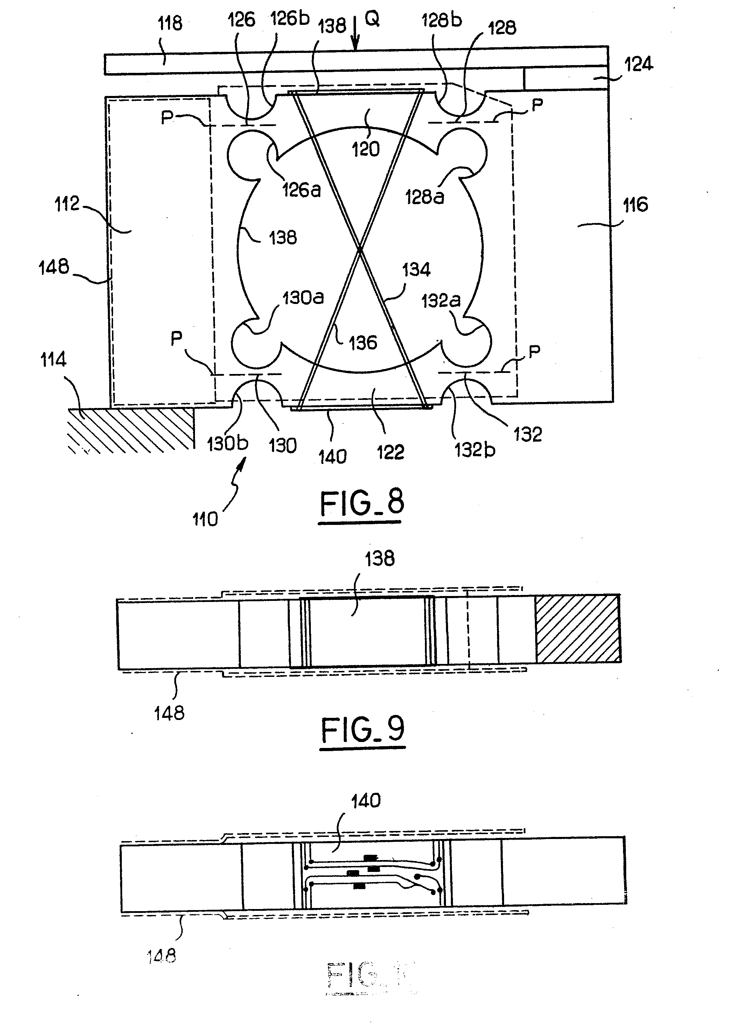

. la figure 6 est une vue en élévation d'un récepteur de charge conforme à une autre variante du premier mode de réalisation, dans lequel les séries d'enroulements prennent appui sur des tiges filetées ;

. la figure 7 est une vue de côté du récepteur de charge de la figure 6 ;

. la figure 8 est une vue en élévation d'un récepteur de charge conforme au troisième mode de réalisation précité ;

. la figure 9 est une vue de dessus du récepteur de charge de la figure 8 ;

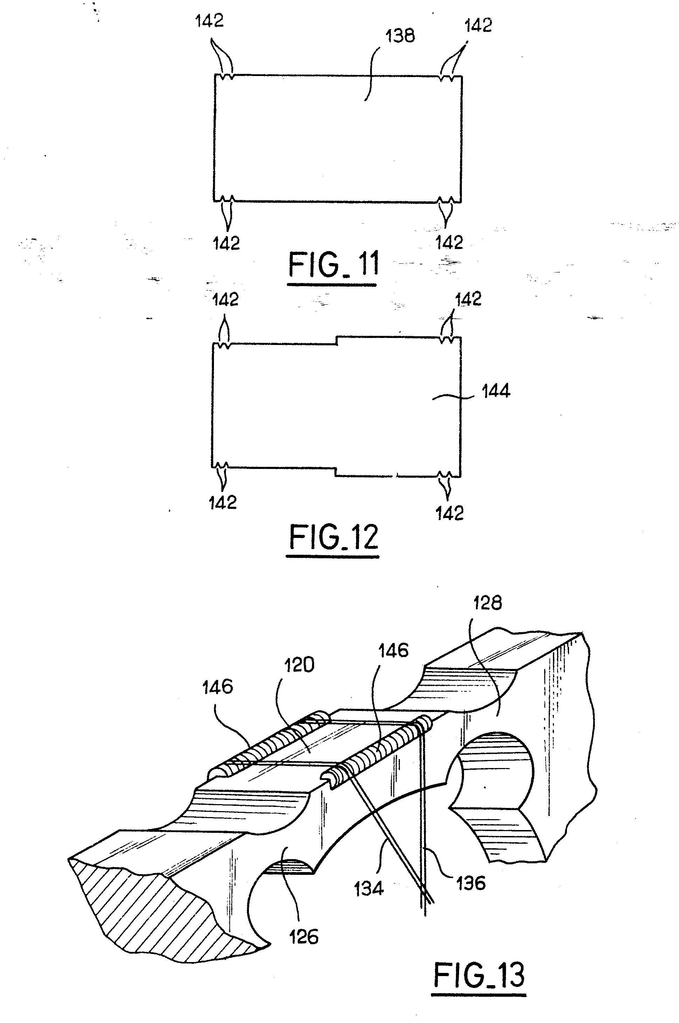

. la figure 10 est une vue de dessous du récepteur de charge de la figure 8 ;

. la figure 11 montre une plaque isolante conforme à l'invention ;

. la figure 12 montre une autre plaque isolante conforme à l'invention, et

. la figure 13 est une vue en perspective partielle montrant la réalisation d'un élément d'appui sous forme de deux tiges cylindriques isolantes.

On a représenté sur la figure 1 une balance, telle qu'une balance commerciale, comportant un récepteur de charge désigné globalement sous la référence numérique 10, comprenant un montant fixe 12 solidaire d'un bâti 14, un montant chargé 16 solidaire d'un plateau porte-charge 18, et deux bras 20 et 22 articulés sur les montants 12 et 16 pour former avec eux un parallélogramme déformable. Le plateau porte-charge 18 est destiné à supporter en un point quelconque une charge désignée par la lettre Q, ce plateau étant rendu solidaire du parallélogramme 10 par l'intermédiaire d'une colonne 24.

L'ensemble des deux montants et des deux bras est réalisé par une structure monobloc, dans une matière élastiquement déformable, par exemple dans un alliage léger, de préférence anodisable. Cette structure monobloc est mu-

8

nie d'étranglements 26, 28, 30 et 32 qui définissent les articulations du parallélogramme déformable.

Dans le mode de réalisation de la figure 1, les montants 12 et 16 et les bras 20 et 22 sont rectilignes. Sous l'effet de la charge Q appliquée sur le plateau 18, le parallélogramme se déforme et les diagonales de celui-ci changent de longueur linéairement. De façon générale, les variations de distance entre des points des bras 20 et 22 ou des montants 12 et 16 sont linéaires en première approximation et tout au moins réversibles du fait de l'élasticité du récepteur de charge.

Le récepteur de charge représenté sur la figure 1 comprend un transducteur de charge destiné à exploiter les variations de distance entre des points des bras ou des montants en fonction de la charge Q appliquée sur le plateau.

Le transducteur de charge comprend quatre séries d'enroulements de fil de jauge pré-tendu, disposées chacune obliquement entre les deux montants 12 et 16 du parallélogramme déformable. Ces quatre séries d'enroulements comprennent deux séries d'enroulements telles 34 (dont une seule a été représentée sur la figure 1) dont les brins principaux sont disposés pratiquement suivant la diagonale joignant les articulations 26 et 32. Sous l'effet de la charge Q appliquée, cette diagonale tend à s'allonger en sorte que les brins principaux des deux séries d'enroulements 34 constituent des brins tendus.

Le transducteur comprend en outre deux séries d'enroulements telles 36 (dont une seule a été représentée sur la figure 1), dont les brins principaux sont disposés pratiquement suivant la diagonale joignant les articulations 28 et 30. Sous l'effet de la charge Q appliquée sur le plateau 18, cette diagonale tend à se raccourcir et les brins principaux des séries d'enroulements 36 constituent alors des brins comprimés.

Les deux séries d'enroulements 34 et 36 se croisent ainsi pratiquement au même endroit que les diagonales du parallélogramme déformable. Chacune des séries d'enroulements 34 ou 36 comprend au moins un enroulement qui comporte deux brins principaux parallèles dont les extrémités sont en contact avec les deux montants ou les deux bras du parallélogramme. Ainsi, comme représenté sur la figure 2, chaque série d'enroulements 34 comporte un brin secondaire 38 en contact avec le récepteur de charge au-dessus de la charnière 26, un brin principal 40 dont les extrémités sont en contact avec les montants 12 et 16, un autre brin secondaire 42 en contact avec le récepteur de charge sous la charnière 32, un autre brin principal 44 parallèle au brin 40, dont les extrémités sont en contact avec les deux montants 16 et 12, et un autre brin secondaire 46 disposé au-dessus de l'articulation 26. Les brins secondaires 38 et 46 aboutissent respectivement aux bornes 48 et 50 de liaison électrique de la série d'enroulements 34 précitée. Bien entendu, chaque série d'enroulements 34 ou 36 peut comporter, si besoin est, plusieurs enroulements, au lieu d'un seul enroulement comme représenté sur la figure 2.

Les quatre séries d'enroulements précitées sont branchées dans un montage électrique en pont, du type pont de Wheatstone, connu en soi, représenté sur la figure 3. Les deux séries d'enroulements 34 qui constituent des brins tendus, désignés sous la lettre T, sont disposés dans les bras opposés du pont, de même les deux séries d'enroulements 36 qui constituent des brinc comprimés, désignés sous la lettre C.

En dehors de toute charge appliquée au corps d'épreuve, le pont de Wheatstone est équilibré, c'est-à-dire que les résistances nominales des fils T (séries d'enroulements 34) et des fils C (séries d'enroulements 36) sont égales. Le montage de ces quatre séries d'enroulements de façon intercalée permet d'obtenir une sensibilité maximale lors de la mesure de la différence du potentiel $V_Q - V_N$ qui doit être nulle au repos. Sa valeur, mesurée par exemple au moyen d'un voltmètre de précision V permet de mesurer les variations cumulées des résistances C et T dues à la déformation induite par la charge appliquée. En pratique, on peut imposer une différence de potentiel de 12 volts aux bornes M et P du pont et l'on mesure la tension $V_Q - V_N$ afin d'en déduire, par étalonnage préalable, la mesure de la force appliquée.

Dans le mode de réalisation appliquée sur la figure 4, le parallélogramme déformable à la forme générale d'un anneau circulaire obtenu soit par extrusion directe pour former en même temps les quatre articulations 26, 28, 30 et 32, soit à partir d'un tronçon de tube dans lequel les articulations 26, 28, 30 et 32 ont été ensuite usinées. Il en résulte que les montants 12 et 16 et les bras 20 et 22 sont constitués par des arcs de cercle et que les faces d'appui aux séries d'enroulements ne sont plus linéaires mais incurvées ce qui annule pratiquement tout risque de glissement des enroulements de fils de jauge, surtout lorsque ces séries d'enroulements sont disposées suivant des diamètres de l'anneau.

Dans une première variante, les deux séries d'enroulements 34 et les deux séries d'enroulements 36 prennent appui sur les bras 20 et 22 et se croisent au centre de l'anneau constituant la structure du parallélogramme. Du fait que les séries d'enroulements 34 et 36 prennent appui sur les bras 20 et 22, ces séries se trouvent moins inclinées par rapport à l'horizontale que les diagonales joignant les quatre articulations 26, 28, 30 et 32.

Dans une deuxième variante, les deux séries d'enroulements 34' dont les brins principaux sont tendus et les deux séries d'enroulements 36' dont les brins principaux sont comprimés sont inclinés symétriquement de part et d'autre de l'axe vertical de symétrie XX du parallélogramme déformable, en définissant ainsi une structure en V. Cette disposition est particulièrement avantageuse du fait que les fils de jauge ne se croisent pas et qu'ils ne peuvent donc ni se toucher ni se gêner. En outre, les connexions des différents enroulements des séries d'enroulements 34 et 36 sont alors regroupées au niveau de l'angle du V, sous le bras 22 ce qui permet de simplifier la fabrication et le câblage du pont et de placer si besoin est un circuit imprimé souple sous le bras 22.

La disposition de la structure en V peut être inversée, c'est-à-dire avec la pointe vers le haut. En variante, la structure en V peut être disposée horizontalement, les séries d'enroulements étant alors inclinées symétriquement de part et d'autre de l'axe de symétrie horizontal du parallélogramme. L'ouverture plus ou moins grande de la structure en V ou l'inclinaison plus ou moins grande des séries d'enroulements sur l'horizontale aura pour effet d'agir sur la sensibilité du récepteur de charge ainsi constitué, ce qui permettra, à partir d'une dimension donnée du parallélogramme (à montants et bras rectilignes, ou bien en anneau), de disposer de plusieurs portées de même sensibilité.

Le récepteur de charge représenté sur la figure 5 est sensiblement analogue à celui de la figure 1, si ce n'est que les étranglements 26, 28, 30 et 32 sont constitués par des évidements ayant leur concavité tournée vers l'extérieur au lieu d'être tournée vers l'intérieur. Cette disposition facilite la mise en place des fils de jauge qui viennent ainsi prendre appui dans les étranglements du parallélogramme.

Le récepteur de charge représenté sur les figures 6 et 7 comprend un parallélogramme déformable dont les étranglements 26, 28, 30 et 32 sont constitués par des évidements en forme d'arc de cercle ayant leur concavité tournée vers l'intérieur. Il comprend quatre tiges filetées 52, 54, 56 et 58 parallèles qui traversent le parallélogramme en sorte que les deux extrémités de chacune de ces tiges dépassent de part et d'autre du parallélogramme. Ces quatre tiges filetées sont parallèles entre elles et aux axes d'articulation du parallélogramme, les tiges 52 et 54 traversent le bras 20 et les tiges 56 et 58 traversant les bras 22.

Les extrémités dépassantes des tiges fournissent des zones d'ancrage pour les séries d'enroulements de fil de jauge, les deux séries d'enroulements 34 (brins principaux tendus) étant disposées d'un même côté du parallélogramme et les deux séries d'enroulements 36 (brins principaux comprimés) étant disposés de l'autre côté du parallélogramme (cf. Fig. 7).

La zone insensible du fil de jauge de chaque enroulement est ainsi réduite au demi-cercle de contact sur la tige filetée correspondante. Cette disposition a pour avantage que les filets des tiges filetées favorisent la mise en place du fil de jauge, que les fils se croisent sans se toucher et que les effets de torsion se compensent.

Les enroulements des séries d'enroulements seront avantageusement collés sur les deux montants ou les deux bras du parallélogramme déformable, sur toutes les portions de l'enroulement en contact avec les montants ou les bras du parallélogramme, ou bien sur les extrémités des tiges filetées servant, le cas échéant, d'appuis aux enroulements.

On pourra utiliser à cet effet une colle durcissable à chaud, par exemple une colle du type époxy ou du type phénolique.

Bien que l'utilisation d'un alliage léger anodisable pour la constitution du parallélogramme déformable permettre d'utiliser un fil de jauge nu, il sera préférable, pour des raisons de sécurité, d'utiliser un fil de jauge émaillé, surtout dans le cas où les enroulements se croisent.

Il est également prévu, dans le cadre de l'invention, de noyer totalement ou partiellement le parallélogramme déformable dans un fluide, notamment dans de l'huile. Ceci favorise la dissipation thermique des enroulements de fils de jauge, permet d'augmenter l'intensité de courant, procure un certain amortissement et procure en outre une protection totale contre l'humidité.

On a représenté sur la figure 8 une balance, telle qu'une balance commerciale, comportant un récepteur de charge désigné globalement sous la référence numérique 110, comprenant un montant fixe 112 solidaire d'un bâti 114, un montant chargé 116 solidaire d'un plateau porte-charge 118 et deux bras 120 et 122 articulés sur les montants 112 et 116 pour former avec eux un parallélogramme déformable.

Le plateau porte-charge 118 est destiné à supporter en un point quelconque une charge désignée par la lettre Q, ce plateau étant rendu solidaire du parallélogramme 110 par l'intermédiaire d'une colonne 124.

L'ensemble des deux montants et des deux bras est réalisé par une structure monobloc, dans une matière élastiquement déformable, par exemple dans un alliage léger de préférence anodisable. Cette structure monobloc est munie d'étranglements 126, 128, 130 et 132 qui définissent les articulations du parallélogramme déformable.

Conformément à la présente invention, les quatre étranglements sont délimités chacun par deux alésage adjacents comprenant un alésage intérieur 126a, 128a, 130a et 132a, et un alésage extérieur 126b, 128b, 130b et 132b, les alésages intérieurs s'ouvrant vers l'intérieur du parallélogramme déformable et les alésages extérieurs s'ouvrant vers l'extérieur du parallélogramme déformable.

Dans la réalisation particulièrement représentée sur la figure 8, les huit alésages présentent tous le même diamètre et présentent des axes parallèles entre eux et contenus dans deux plans verticaux en sorte que les étranglements présentent dans leur zone de flexion, une ligne neutre dont la pente P est horizontale. Ces huit alésages sont réalisés au travers d'une plaque rectangulaire d'épaisseur qui présente un évidement circulaire central 138 de grand diamètre par rapport au diamètre des alésages intérieurs et extérieurs.

Comme on peut le constater sur la figure 8, les alésages extérieurs sont pratiquement semi-circulaires, tandis que les alésages intérieurs s'étendent sur environ trois quart de cercle.

Un tel récepteur de charge peut être facilement réalisé puisqu'il suffit d'effectuer huit alésages sur une plaque d'épaisseur présentant un évidement central qui n'a pas besoin d'être usiné parfaitement.

Comme dans le cas des figures 1 à 7, le récepteur de charge comprend un transducteur de charge destiné à exploiter les variations de distance entre des points des bras en fonction de la charge Q appliquée sur le plateau.

Le transducteur de charge comprend quatre séries d'enroulements de fil de jauge pré-tendu, disposées chacune obliquement entre les deux bras 120 et 122 du parallélogramme déformable. Ces quatre séries d'enroulements comprennent deux séries d'enroulements telles 134 dont les brins principaux sont disposés à proximité de la diagonale joignant les articulations 126 et 132. Sous l'effet de la charge Q appliquée, cette diagonale tend à s'allonger en sorte que les brins principaux des deux séries d'enroulements 134 constituent des brins tendus.

Le transducteur comprend en outre deux séries d'enroulements telles 136 dont les brins principaux sont disposés à proximité de la diagonale joignant les articulations 128 et 130. Sous l'effet de la charge Q appliquée sur le plateau 118, cette diagonale tend à se raccourcir et les brins principaux des séries d'enroulements 136 constituent alors des brins comprimés.

Les deux séries d'enroulements 134 et 136 se croisent ainsi pratiquement au même endroit que les diagonales du parallélogramme déformable. Comme dans le cas des figures 1 à 7, chacune des quatre séries d'enroulements peut comporter soit un seul enroulement soit plusieurs enroulements selon le cas. Ces quatre séries d'enroulements sont branchées dans un montage électrique en pont, du type pont de Wheatstone, connu en soi, comme représenté plus particulièrement sur la figure 3. Les séries d'enroulements 134 qui constituent les brins tendus sont disposés dans des bras opposés du pont, de même que les deux séries d'enroulements 136 qui constituent des brins comprimés.

Les séries d'enroulements 134 et 136 s'appliquent sur la face horizontale supérieure du bras 120 et sur la face horizontale inférieure du bras 122 par l'intermédiaire de plaques d'appui 138 et 140. La plaque d'appui 138, qui est représentée également sur les figures 9 et 11, est une plaque rectangulaire réalisée en une matière isolante, qui est vissée ou collée sur la face supérieure du bras 120. La plaque 138 présente une largeur supérieure à celle du bras

120 de manière à offrir un déport pour que le fil de jauge se trouve à distance des faces verticales des bras et ne puisse donc venir en contact avec ces dernières. La plaquette 138 est avantageusement moulée dans un matériau électriquement isolant, et présente de préférence des encoches 142 venues de moulage (cf. Fig. 11). Ces encoches réalisées dans le chant de la plaque sont destinées à faciliter la mise en place et la tenue du fil de jauge.

La plaque 140 est réalisée de façon similaire à la plaque 138, c'est-à-dire qu'elle présente également des encoches venues de moulage. Il est toutefois avantageux que la plaque 140 comporte un circuit imprimé pour permettre la connexion des fils de jauge aux bornes du pont de Wheatstone. La liaison des fils de jauge s'effectue alors sur le circuit lui-même en huit points, comme représenté sur la figure 10.

Il est particulièrement avantageux que l'une des plaques soit réalisée sous la forme d'une plaque 144 de largeur non constante en sorte que les encoches 142 situées à proximité de l'une des extrémités de la plaque soient plus proches les unes des autres que les encoches 142 situées à proximité de l'autre extrémité de la plaque (cf. Fig. 12). Il en résulte alors que les fils de jauge ne peuvent se toucher à leur endroit de croisement, qui correspond pratiquement au centre de l'évidement central 138.

Dans la variante de réalisation représentée sur la figure 13, l'élément d'appui comporte deux tiges cylindriques isolantes 146 évidées suivant un quart de rond et appliquée chacune sur une arête du bras 120. Les tiges 146 peuvent être avantageusement réalisées à partir des tiges filetées, qui facilitent la tenue des fils de jauge 134 et 136. Il est tout particulièrement avantageux que les tiges 146 soient placées sur le bras supérieur 120, et que l'on dispose une plaque avec un circuit imprimé sous le bras inférieur 122.

Comme représenté sur les figures 8 à 11, le récepteur de charge est placé à l'intérieur d'une carter 148 qui est agencé de manière à limiter au maximum les turbulences d'air autour des fils de jauge. Ce carter est fixé sur le montant fixe 112 et ne laisse subsister que le passage de la colonne 124 de fixation du plateau 118 avec un jeu réduit, par exemple de l'ordre du millimètre, pour permettre la déformation du parallélogramme déformable. La stabilité est alors remarquable et les tensions d'alimentation admissibles nettement plus élevées. Ce carter peut être réalisé en acier, en alliage léger ou bien en matière plastique, un carter moins complet, mais bien plus simple à monter, laissant subsister un espace le long de chaque face du montant vertical, de sorte que les fils se trouvent alors situés dans une sorte de poche d'air, donne aussi des résultats d'une bonne stabilité, suffisante dans bien des cas.

L'invention trouve une application toute particulière dans la réalisation de balances à usage commercial.

REVENDICATIONS

1. Récepteur de charge du type comprenant un montant fixe (12) solidaire d'un bâti (14), un montant chargé (16) solidaire d'un plateau porte-charge (18) et deux bras (20, 22) articulés sur les montants pour former avec eux un parallélogramme déformable, et dans lequel l'ensemble des deux montants et des deux bras est réalisé par une structure monobloc, munie d'étranglements (26, 28, 30, 32) qui définissent les articulations du parallélogramme déformable, tandis qu'un transducteur de charge est prévu pour détecter la déformation du parallélogramme sous l'effet de la charge (Q) appliquée sur le plateau, caractérisé par le fait que le transducteur comprend quatre séries d'enroulements de fil de jauge pré-tendu disposées chacune obliquement entre les deux montants (12, 16) ou entre les deux bras (20, 22) du parallélogramme de manière à former deux séries d'enroulements (34) dont les brins principaux sont tendus et deux séries d'enroulements (36) dont les brins principaux sont comprimés sous l'effet de la charge appliquée, les quatre séries d'enroulements étant branchées dans un montage électrique en pont.

2. Récepteur de charge selon la revendication 1, caractérisé par le fait que les deux séries d'enroulements (34) dont les brins principaux sont tendus croisent les deux séries d'enroulements (36) dont les brins principaux sont comprimés.

3. Récepteur de charge selon la revendication 2, caractérisé par le fait que les quatre séries d'enroulements (34, 36) se croisent sensiblement suivant les diagonales du parallélogramme déformable.

4. Récepteur de charge selon la revendication 1, caractérisé par le fait que les deux séries d'enroulements (34') dont les brins principaux sont tendus et les deux séries d'enroulements (36') dont les brins principaux sont comprimés sont inclinées symétriquement de part et d'autre d'un axe de symétrie vertical du parallélogramme en définissant une structure en V ou en V renversé.

5. Récepteur de charge selon l'une des revendications 1 à 4, caractérisé par le fait que le parallélogramme déformable comprend des montants (12, 16) et des bras (20, 22) rectilignes.

6. Récepteur de charge selon l'une des revendications 1 à 4, caractérisé par le fait que le parallélogramme a la forme générale d'un anneau circulaire dans la matière duquel sont usinées les articulations (26, 28, 30, 32).

7. Récepteur de charge selon la revendication 1, caractérisé par le fait que chaque série d'enroulement (34, 36) comprend au moins un enroulement qui comporte deux brins principaux dont les extrémités sont en contact avec les deux montants ou les deux bras du parallélogramme.

8. Récepteur de charge selon la revendication 7, caractérisé par le fait que chaque enroulement est collé sur les deux montants (12, 16) ou les deux bras (20, 22) sur toutes les portions de l'enroulement en contact avec les montants ou bras du parallélogramme.

9. Récepteur de charge selon la revendication 1, caractérisé par le fait qu'il comprend quatre tiges filetées (52, 54, 56, 58) traversant le parallélogramme en sorte que leurs deux extrémités dépassent de part et d'autre du parallélogramme pour fournir des zones d'ancrage aux séries d'enroulements de fil de jauge, deux séries d'enroulements étant situées d'un côté du parallélogramme et les deux autres séries d'enroulements étant situées de l'autre côté du parallélogramme.

10. Récepteur de charge selon l'une des revendications 1 à 9, caractérisé par le fait que le parallélogramme déformable est noyé totalement ou partiellement dans un fluide, notamment dans de l'huile.

11. Récepteur de charge du type comprenant un montant fixe (112) solidaire d'un bâti (114), un montant chargé (116) solidaire d'un plateau porte-charge (118) et deux bras (120, 122) articulés sur les montants pour former avec eux un parallélogramme déformable, et dans lequel l'ensemble des deux montants et des deux bras est réalisé par une structure monobloc, munie d'étranglements (126, 128, 130, 132) qui définissent les articulations du parallélogramme déformable, tandis qu'un transducteur de charge est prévu pour détecter la déformation du parallélogramme sous l'effet de la charge (Q) appliquée sur le plateau, le transducteur comprenant quatre séries d'enroulements de fil de jauge pré-tendu disposées chacune obliquement entre les deux bras (120, 122) du parallélogramme de manière à former deux séries d'enroulements (134) dont les brins principaux sont tendus et deux séries d'enroulements (136) dont les brins principaux sont comprimés sous l'effet de la charge appliquée, les quatres séries d'enroulements étant branchées dans un montage électrique en pont, selon la revendication 1 caractérisé par le fait que les étranglements définissant les articulations du parallélogramme déformable sont délimités chacun par deux alésages adjacents comprenant un alésage intérieur (126a, 128a, 130a, 132a) et un alésage extérieur (126b, 128b, 130b, 137b) s'ouvrant respectivement vers l'intérieur et vers l'extérieur du parallélogramme déformable.

12. Récepteur de charge selon la revendication 11, caractérisé par le fait que les axes des alésages intérieurs (126a, 128a, 130a, 132a) et des alésages extérieurs (126b, 128b, 130b, 132b) sont parallèles entre eux et contenus dans deux plans verticaux en sorte que les étranglements

0094290

21

présentent, dans leur zone de flexion, une ligne neutre dont la pente est horizontale.

13. Récepteur de charge selon la revendication 11, caractérisé par le fait que les axes des alésages intérieurs (126a, 128a, 130a, 132a) sont contenus dans deux plans verticaux et les axes des alésages extérieurs (126b, 128b, 130b, 132b) dans deux autres plans verticaux, en sorte que les axes des deux alésages extérieurs d'un bras soient plus proches l'un de l'autre que les axes des deux alésages intérieurs du même bras.

14. Récepteur de charge selon l'un des revendications 11 à 13, caractérisé par le fait que les quatre alésages intérieurs (126a, 128a, 130a, 132a) et les quatre alésages extérieurs (126b, 128b, 130b, 132b) sont réalisés au travers d'une plaque rectangulaire d'épaisseur présentant un évidement circulaire central (138).

15. Récepteur de charge selon l'une des revendications 11 à 14, caractérisé par le fait que les quatre séries d'enroulements (134, 136) sont appliquées sur les bras (120, 122) du parallélogramme déformable par l'intermédiaire d'éléments d'appui isolants (138, 140, 144, 146) offrant un déport pour que le fil de jauge se trouve à distance des faces verticales des bras.

16. Récepteur de charge selon la revendication 15, caractérisé par le fait que les éléments d'appui comprennent au moins une plaque isolante (138, 140, 144) fixée sur la face extérieur du bras, présentant une largeur supérieure à celle du bras et comportant des encoches (142) sur son chant aux endroits de passage du fil de jauge.

17. Récepteur de charge selon la revendication 16, caractérisé par le fait que la plaque isolante (138) présente une largeur constante.

18. Récepteur de charge selon la revendication 16, caractérisé par le fait que la plaque isolante (144) présente une largeur variable.

19. Récepteur de charge selon l'une des revendications 16 à 18, caractérisé par le fait que l'une des plaques isolantes (140) constitue un circuit imprimé pour la connexion des quatre séries d'enroulements.

20. Récepteur de charge selon la revendication 15, caractérisé par le fait que chaque élément d'appui comporte deux tiges cylindriques isolantes (146) évidées suivant un quart de rond appliquées chacune sur une arête d'un bras.

21. Récepteur de charge selon l'une des revendications 11 à 20, caractérisé par le fait qu'il comporte un carter de protection (148) solidaire du montant fixe (112) et offrant un jeu pour permettre la déformation du parallélogramme.

0094290

1/4

FIG_1

FIG_2

FIG_3

FIG_4

Q

18

24

26

28

20

12

16

14

36

34

30

22

32

10

**FIG. 5**

18    26    52    Q    54    28

24

20

12    34    36    16    54    36    34

30    22    58    32

FIG_8

FIG_9

FIG.

142          138          142

142                     142

**FIG. 11**

142                    142

144

142                    142

**FIG. 12**

128

146   120   146

134    136

126

**FIG. 13**